# EUROPEAN PATENT APPLICATION

(11) **EP 4 741 810 A1**
(43) Date of publication of application: **13.05.2026**
(21) Application number: 24211639.0
(22) Date of filing: 08.11.2024
(51) Int. Cl.: G01N 23/04

(54) **DEVICE FOR CALIBRATING AN X-RAY SYSTEM, X-RAY APPARATUS AND METHOD FOR CALIBRATING AN X-RAY APPARATUS**

(71) Applicant: Mettler-Toledo, LLC, Columbus OH 43240 (US)
(72) Inventor: HOFFMANN, Benedikt, 65510 Idstein (DE)
(74) Representative: Leinweber & Zimmermann

(57) **Abstract**

A device (100) for calibrating an X-ray system (200) with an X-ray source (210) and an X-ray detector (220), the calibration device (100) comprising a set of at least two X-ray absorptive elements (1, 2), each element (1, 2) extending in a longitudinal (LO) and in a lateral (LA) direction, is according to the invention characterized in that the device (100) is configured to enable adjustment of the position of each element (1, 2) along a closed curve (*C*₁, *C*₂) in a plane that extends transverse to the lateral direction (LA) and in parallel to the longitudinal direction (LO) so that elements (1, 2) in each of a first and a second subset (10, 20) of the set of elements (1, 2) are positioned with their longitudinal directions (LO) aligned in an alignment direction transverse to the curve (*C*₁, *C*₂)*,* and wherein a first total length in the longitudinal direction (LO) of the elements (1, 2) of the first subset (10) is different from a second total length in the longitudinal direction (LO) of the elements (1, 2) of the second subset (20).

## Description

The present invention is related to a device for calibrating an X-ray system with an X-ray source and an X-ray detector, the calibration device comprising a set of at least two X-ray absorptive elements, each element extending in a longitudinal and in a lateral direction. The calibration device is in particular suitable for calibrating an X-ray system where an object to be inspected is transported along a transport path between the X-ray source and the X-ray detector. The invention is further related to an X-ray apparatus comprising the X-ray system and the calibration device and to a method for calibrating the X-ray apparatus.

X-ray systems have many applications, including product inspection. In the food industry for example, the reliable detection of foreign objects in food products is of high importance. To this end, an object to be inspected may be transported along a transport path, for example, by a belt conveyor, between an X-ray source and an X-ray detector of an X-ray system. The X-ray source may create a fan-shaped beam, and the X-ray detector may be arranged so as to receive the X-ray beam and may be configured to output a signal in response to an amount of received radiation. In this way, a two-dimensional X-ray image of the object to be inspected may be created. In the example of food inspection mentioned above, the X-ray image may allow to infer the presence of foreign objects in a food product.

X-ray systems are based on the physical phenomenon of X-ray absorption. For a monochromatic beam, the absorption is directly related to the distance x travelled by the X-rays in a homogenous body according to *I = I*₀*e^{-bx}* (Beer-Lambert law). Here, *I*₀ is the intensity of the incident radiation, *I* is the intensity of the transmitted radiation and *b* is the coefficient of X-ray absorption that depends on the material.

X-ray systems have to undergo calibration in regular intervals to ensure that the output signal of the detector is indicative of the amount of the received radiation. This is due to the fact that the properties of the X-ray system, in particular, properties of the X-ray source and the X-ray detector may change with time. Furthermore, the properties of a newly produced X-ray system may not be completely known. For example, the X-ray detector may comprise a scintillation material which responds to the incident X-ray radiation. This scintillation material may not be homogeneous. Furthermore, for line detectors made of a plurality of individual detector elements, the detector elements may have slightly different properties and therefore the detector may require calibration before use.

In a common calibration process, a so-called phantom which is an object with known absorption properties is placed between the X-ray source and the X-ray detector within the X-ray beam. The output signal of the detector is recorded for the phantom and the X-ray system may be calibrated so that the output signal is indicative of the amount of radiation that must have passed through the phantom. In certain calibration processes, phantoms with spatially varying absorption properties are required to carry out calibration.

A variety of possible calibration devices (phantoms) are known in the art. In general, the calibration devices are adapted for the calibration of a specific type of X-ray system. US 5,214,578 discloses a method for calibrating an X-ray system with an X-ray source and an X-ray detector, wherein the X-ray detector is rotatable on an axis around a body under study and wherein a circular phantom is positioned with its center offcentered with respect to the axis of rotation of the X-ray system. This calibration device is well-suited for calibrating X-ray systems with a rotatable detector.

JP 7102190 B2 discloses a calibration device for an X-ray CT scanner. The calibration device comprises a plurality of concentric layers and at least one of the composition and concentration of substances included in each of the plurality of layers is different from each other at a plurality of rotation angles. The calibration device is scanned at the plurality of different rotation angles. This calibration device is well-suited for calibrating X-ray systems that are based on scanning at different rotation angles.

US 4,400,827 discloses a calibration device for calibrating rapid sequence radiography. The calibration device comprises a disc on which a plurality of X-ray absorptive elements with different thickness perpendicular to the surface of the disc are arranged in a stepwise manner along the circumference of the disc. The disc is rotated along a central axis perpendicular to its surface in synchronism with cinematic photography means of the cinematic radiography means to thereby change the thickness of the X-ray absorptive material of the disc for each frame of the cinematic radiography.

US 5,565,678 discloses a calibration target for a radiographic imaging system with a plurality of X-ray absorbing discs being stacked on top of each other. Thereby, regions with different absorptive properties in the radial direction are created.

EP 4 201 334 A1 discloses a calibration phantom for calibrating a CT imaging system, the calibration phantom comprising a base and a plurality of calibration wires dispersedly connected to the base.

US 2020/0261050 A1 discloses a calibration phantom for an X-ray imaging system having a plurality of second and third objects arranged around the periphery of a first, middle object. At least one of the second and third objects is made from second and third materials, respectively, so that the first, second and third materials are different from each other. The calibration phantom is moved within the X-ray path, path lengths through the different materials of the phantom are determined and calibration is effected by generating a mapping between the path lengths and a detector response of the X-ray detector.

The calibration devices mentioned above are not particularly adapted for calibrating an X-ray system where an object to be inspected is transported along a transport path between the X-ray source and the X-ray detector. US 2003/0072417 A1 and US 10, 813,618 B2 each disclose a calibration device which comprises a plurality of X-ray absorptive elements with different heights arranged in a step-shaped configuration. The different heights of the elements result in a different path length for the X-ray radiation. The calibration device is particularly suitable for an X-ray system with a fan-shaped beam and a line detector wherein an object to be inspected is transported along a transport path between the X-ray source and the X-ray detector. Reliable calibration of the X-ray system requires several passes of the object through the X-ray system due to unavoidable imprecisions in positioning of the calibration device.

Due to these problems in the prior art, it is therefore the object to provide a calibration device for efficient and reliable calibration of an X-ray system, in particular an X-ray system where an object to be inspected is transported along a transport path between the X-ray source and the X-ray detector. According to a first aspect of the present invention, the problem is solved by a device for calibrating an X-ray system of the afore-mentioned type, wherein the device is configured to enable adjustment of the position of each element along a closed curve in a plane that extends transverse to the lateral direction and in parallel to the longitudinal direction so that elements in each of a first and a second subset of the set of elements are positioned with their longitudinal directions aligned in an alignment direction transverse to the curve, and wherein a first total length in the longitudinal direction of the elements of the first subset is different from a second total length in the longitudinal direction of the elements of the second subset.

The expression "closed curve" should be construed to also cover a curve that extends between two turning points between which the position of the element may be adjusted on the curve. In this case, the area enclosed within the curve becomes zero.

In the constitution of the invention, each of the two subsets corresponds to an aligned configuration of a number of absorptive elements corresponding to the number of elements in the respective subset. The adjustment of the positions of the aligned configurations allows for causing each of their alignment directions to successively become coincident with a radiation beam path that extends between the X-ray source and the X-ray detector. Thereby, the different configurations result in different absorption lengths for the radiation passing through these configurations along their alignment directions.

The calibration device according to the first aspect of the present invention is thus configured to enable adjustment of the position of the X-ray absorptive elements along the closed curve so that distances of travel of an X-ray beam traveling through the aligned elements of the first and second subsets in the alignment direction are different from each other. Thereby, no movement of the calibration device along a transport path between the X-ray source and the X-ray detector is required for calibration in contrast to the prior art, but the calibration device may be stationary. In this way, efficient and reliable calibration may be performed. Furthermore, the calibration device may be universally applied for calibration of X-ray devices. The calibration device may be constructed with a small and compact form.

The calibration device comprises a set of at least two X-ray absorptive elements. Preferably, the calibration device comprises more than two X-ray absorptive elements. The elements of the set of elements may be made from the same material in one example, but the invention is not limited to this. In one example, the material may be a polymeric material. In one example, the material may be PE or PMMA, however, the invention is not limited to this. In another example, the material may be a metal, for example, aluminum or iron.

The longitudinal and the lateral directions are defined with respect to each element. In particular, the lateral extensions of all elements may be parallel to each other.

In one expedient example, the lateral extension may be larger than the longitudinal extension of the elements. In one example, the lateral extension may be the same for all elements. In one example, the lateral extension may be chosen such that it is equal to or larger, preferably, at least 2 %, 5 % or 10 % larger than a width of a typical X-ray detector used in an X-ray system to be calibrated. In a further example, the elements may have a cuboid shape.

In one further example, the plane may be normal to the lateral extension of the elements. In a further example, the longitudinal and the lateral directions may be orthogonal directions.

The first subset may comprise one or more elements. Furthermore, the second subset may comprise one or more elements. The first and second subsets are different from each other. In particular, they differ in at least one element. However, they may also differ in more than one element or in all elements in one example.

In a further expedient example, the calibration device is configured to enable adjustment of the position of each element of the set of elements along the closed curve so that elements in each of a plurality of different subsets of elements become located with their longitudinal directions aligned in the alignment direction transverse to the curve, and wherein the total length in the longitudinal direction of the elements of each subset is different from the total length in the longitudinal direction of the elements in the other subsets. The plurality of subsets may be three, four or more subsets of elements. Therefore, a plurality of different distances of travel for the X-ray beam through the aligned elements of the different subsets in the alignment direction may be created.

In an expedient example, the alignment directions for the two or more subsets of elements may be identical. This is particularly favorable for an X-ray system with an X-ray source which is configured to emit an X-ray beam in a fixed direction.

Each of the elements has first and second longitudinal ends in the longitudinal direction, and the first and second longitudinal ends may move along the curve during adjustment.

The first longitudinal ends may be located closer to the center of the curve than the second longitudinal ends. In one example, one of the ends is located on the curve.

In one example, the alignment direction may be a direction normal to the curve.

In one example, the curve is a convex curve.

According to another embodiment of the first aspect of the present invention, the curve may comprise a plurality of nested, crossing free curves, each element may be associated with one curve of the plurality of curves, and the device may be configured to enable adjustment of the position of each element along the associated curve independent of the position of the elements associated with the other curves. According to the embodiment, the device is configured to enable adjustment of the position of each element along the associated curve of a plurality of K ≥ 2 curves. The curves all lie within the same plane. Each of the curves has a different peripheral length, and each curve, except the one with the largest peripheral length, is located completely within the curves with larger peripheral lengths. The device may be configured to enable adjustment of the position of the elements along two curves in one example. In another example, the device may be configured to enable adjustment of the position of the elements along more than two curves, for example, along three, four or five curves. According to the embodiment, the device is configured to enable adjustment of the position of all elements associated with one curve simultaneously and independently from the position of the elements associated with the other curves. The first and second subsets, and potentially further subsets of elements may comprise elements associated with different curves of the plurality of curves in one example. However, the invention is not limited to this, and the first and second subsets and potentially further subsets of elements may contain only elements associated with the same curve.

In one embodiment, the calibration device may be configured to enable adjustment of the positions of the elements associated with the same curve simultaneously, and in particular only simultaneously.

In a further embodiment, the curves may be concentric curves. The center of the concentric curves may be seen as a center of rotation. In a further embodiment, the curve(s) is (are) circular. The longitudinal directions of the elements may be normal to the curve, and the alignment direction of the elements may be the normal direction in one example. The lateral direction of the elements may be orthogonal to the longitudinal direction and may be normal to the plane of the curve.

In a further embodiment of the calibration device according to the first aspect of the present invention, at least two elements may have a different longitudinal extension. When the device is configured to enable adjustment of the position of each element along a single closed curve, at least two elements on this single curve may have a different longitudinal extension. In this case, the first and second subsets may each contain one of the at least two elements having different longitudinal extension. When the device is configured to enable adjustment of the position of each element along more than one closed curve, the position of the at least two elements with different longitudinal extension may be adjustable on the same or on different curves.

In another example of the invention, the device may comprise at least three elements, two of which have the same longitudinal extension, and wherein each of the first and second subsets comprises one of the two elements with identical longitudinal extension and one of the two subsets contains a further element with the same or different longitudinal extension.

According to yet another embodiment of the calibration device according to the present invention, the elements may be separate elements. The distance between neighboring elements along the same curve may be the same or different for each pair of neighboring elements. In one example, at least some of the elements may touch at their first or second ends.

In an expedient example of the above embodiment, the device may be configured to enable adjustment of the positions of the elements so as to form a passageway extending straightly across the curve(s) and having none of the elements positioned therein. In this way, the device may be operative to adjust the positions of the elements along the closed curve(s) so that an X-ray beam may pass through the device without passing through any of the X-ray absorptive elements. In particular, the passageway may extend in the alignment direction in one example.

In a further embodiment of the calibration device according to the first aspect of the present invention, the first and/or second subsets may comprise two elements associated with the same curve. For example, when the closed curve is circular and the longitudinal directions of the elements in the first and/or second subsets are respectively, aligned normal to the curve, the two elements associated with the same curve are located diametrically opposite with respect to the curve. Thus, instead of a single element having a first length in the longitudinal direction, two elements with second and third lengths in the longitudinal direction may be provided diametrically opposite with respect to the curve, wherein the sum of the second and third lengths is equal to the first length. Thereby, the total height of the calibration device may be reduced which is favorable as X-ray systems generally have a limited space between the X-ray source and the X-ray detector.

According to yet another embodiment of the calibration device, first and second lateral ends of the elements may be mounted on first and second supports, respectively, which are spaced apart in the lateral direction and the device may be configured to enable independent rotation of the first and second supports around a common axis extending in the lateral direction so as to adjust the position of the elements along the closed curve(s). In one example, the device may comprise a stepper motor configured to drive the first and second supports. The embodiment allows for a simple constructive realization of the adjustment of the elements along the curve. The lateral length of all elements may be the same in this embodiment. In one preferred example, the first and second supports may be disc-shaped. However, the invention is not limited to this.

In yet another embodiment of the calibration device according to the first aspect of the present invention, the first and second supports may each comprise a plurality of first and second segments, respectively, and the device may be configured to enable rotation of the first and second segments relative to each other to thereby enable a relative movement of the elements associated with different curves. In one example, the segments may have an annular shape, but the invention is not limited to this.

For calibration purposes, the calibration device needs to be positioned between the X-ray source and the X-ray detector. Therefore, in another embodiment of the present invention, the device may comprise means for positioning the calibration device on the X-ray system between the X-ray source and the X-ray detector. The positioning means may comprise magnetic means in one example. The magnetic means may be configured to interact with complementary magnetic means arranged in the X-ray system to thereby realize positioning of the calibration device. In another example, the positioning means may comprise a support frame.

In a further embodiment of the calibration device according to the present invention, the calibration device may comprise a stationary X-ray absorber arranged within the curve(s). The stationary X-ray absorber is not moveable by operation of the calibration device. Thereby, X-ray radiation passing through the calibration device may be absorbed independent of the position of the elements along the curve(s).

According to a second aspect of the present invention, there is provided an X-ray apparatus comprising an X-ray system having an X-ray source operative to emit an X-ray beam along a radiation path and an X-ray detector arranged so as to receive the X-ray beam and to output a signal in response to an amount of the received radiation, and a calibration device according to anyone of the above, wherein the calibration device is arranged between the X-ray source and the X-ray detector such that when the longitudinal directions of the elements of the first and second subsets are respectively aligned in the alignment direction and the longitudinal extension of the elements of the first and second subsets is within the radiation plane along a radiation path of the X-ray beam. The X-ray apparatus according to the second aspect of the present invention allows for calibration with a stationary calibration device wherein different distances of travel of an X-ray beam through the elements is obtained by adjusting the positions of the X-ray absorptive elements along the closed curve or curves. The X-ray apparatus according to the second aspect of the present invention allows for a highly efficient and reliable calibration of the X-ray system.

In one embodiment, the X-ray apparatus may be configured to emit a fan-shaped X-ray beam in a radiation plane and the X-ray detector may comprise a line detector which is arranged in the radiation plane so as to receive the radiation beam.

According to a third aspect of the present invention, there is provided a method for calibrating an X-ray system of an X-ray apparatus according to the second embodiment, the method comprising the following steps:
adjusting of the positions of the elements of the calibration device in a first position so that the longitudinal directions of the elements of the first subset are aligned in the alignment direction;
after adjusting the elements in the first position, operating the X-ray source to thereby receive a first signal indicative of the amount of radiation which has travelled through the elements of the first subset;
adjusting of the positions of the elements of the calibration device in a second position so that the longitudinal directions of the elements of the second subset are aligned in the alignment direction;
after adjusting the elements in the second position, operating the x-ray device to thereby receive a second signal indicative of the amount of radiation which has travelled through the elements of the second subset;
calibrating the X-ray system on the basis of the first and second signals.

As the absorptive properties of the elements of the first and second subsets are known, the X-ray system may be calibrated so that the output signal is indicative of the amount of the received radiation. Preferably, the calibration device may comprise a plurality of subsets of elements with different total length in the longitudinal direction, and the method may comprise adjusting the position of the elements so that the aligned longitudinal directions of each subset of elements are in the radiation plane.

In one embodiment, the method further comprising the steps:
adjusting the positions of the elements of the calibration device in a zero position so that no elements are aligned in the alignment direction;
after adjusting the elements in the zero position, operating the X-ray device to thereby receive a base signal indicative of the maximum amount of radiation which has travelled through no subset of elements

In the following, the invention is described in greater detail by way of example with reference to the drawings in which:
- Fig. 1a: is a perspective sectional view of an X-ray apparatus according to the second aspect of the present invention, the X-ray apparatus comprising and X-ray system and a calibration device according to the first aspect of the invention;
- Fig. 1b: is an enlarged view of the portion of Figure 1a which shows the X-ray system and the calibration device;
- Fig. 2: is a side view of the elements of the calibration device according to the first aspect of the present invention, wherein some of the elements are partially removed for ease of representation;
- Figs. 3a-3b: are sectional views showing different configurations obtained by operating the calibration device of Figure 2.

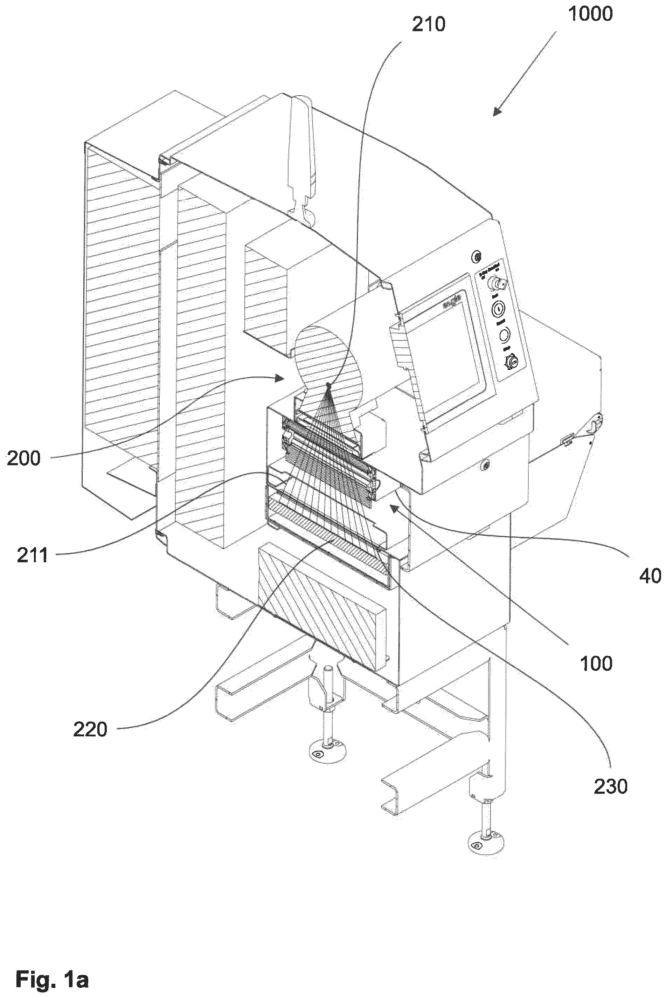

Figure 1a is a perspective sectional view of an embodiment of an X-ray apparatus 1000 according to the second aspect of the present invention. The X-ray apparatus 1000 comprises an X-ray system 200 and a calibration device 100 according to an embodiment of the first aspect of the present invention. The X-ray system 200 comprises an X-ray source 210. The X-ray source is operative to emit a fan-shaped beam 211 in a radiation plane. The X-ray system 200 further comprises an X-ray detector which is a line detector 220 and which is spaced apart from the X-ray source 210 in a vertical direction. The X-ray detector 220 may comprise a plurality of detector elements, for example having a scintillation material, that convert incident X-ray radiation into an electrical signal which is processed in the X-ray apparatus 1000 and is calibrated by comparison to a standard to provide a measurement output that is indicative of the amount of the incident X-ray radiation. However, the calibration may change during use, and the X-ray apparatus 1000 may require re-calibration. All this may be attained by use of the calibration device 100 further specified below.

The X-ray system 200 further comprises a belt conveyor 230 configured to transport an object to be inspected along a transport path transverse, in particular perpendicular, to the radiation plane.

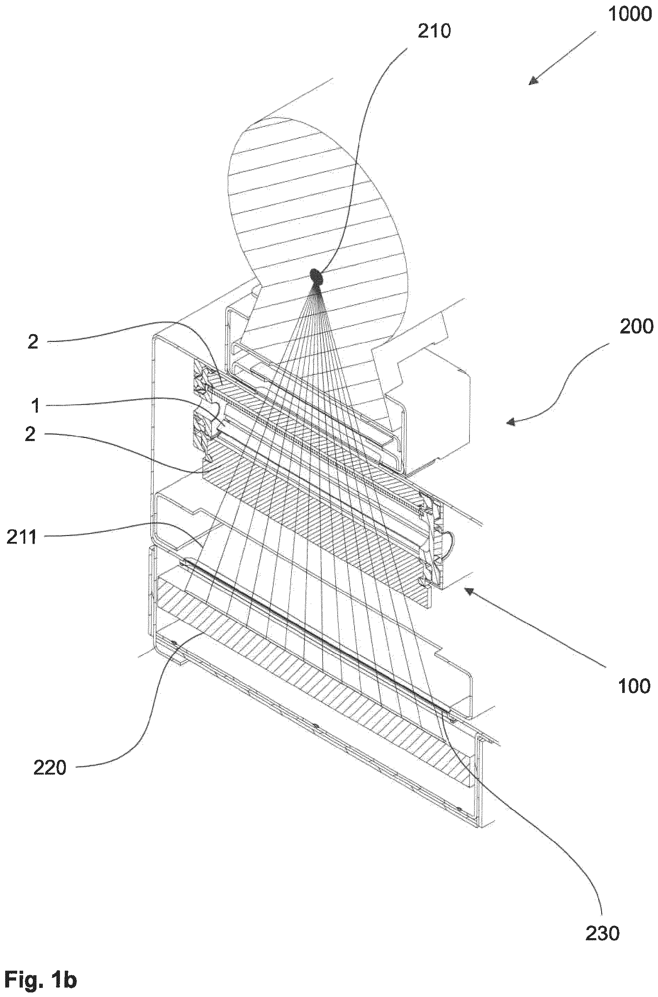

Figure 1b is an enlarged view of a portion of Figure 1a which shows the X-ray system 200 and the calibration device 100. As one may take from Figure 1b, the calibration device 100 comprises a plurality of X-ray absorptive elements 1, 2. The calibration device 100 is configured to enable adjustment of the position of the elements 1, 2 as further specified below so that selected elements 1, 2 lie within the radiation plane.

The calibration device 100 further comprises positioning means 40 configured to position the calibration device 100 between the X-ray source 210 and the X-ray detector 220.

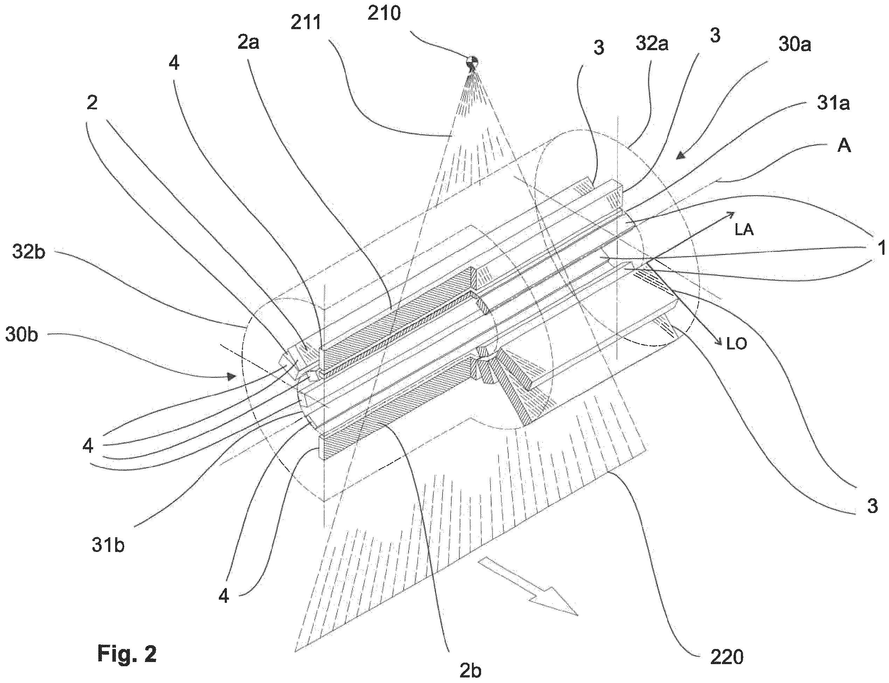

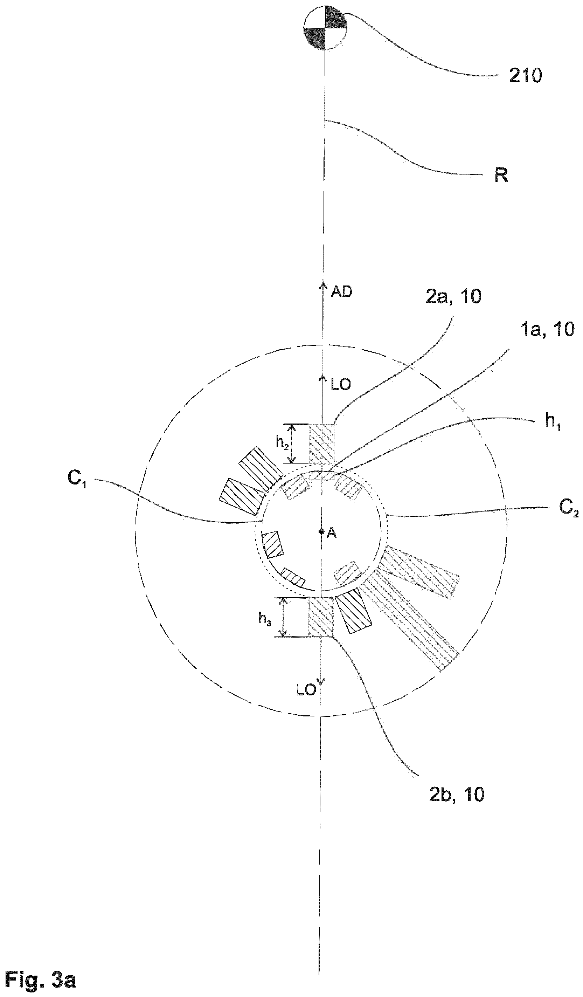

Figure 2 is a perspective view of elements 1, 2 of the calibration device 100 according to the embodiment shown in Figures 1a and 1b. Some of the elements 1, 2 are partially removed for ease of representation. As one may take from Figure 2, the calibration device 100 comprises a plurality of (inner) elements 1 associated with a first (inner) curve *C*₁ (see figures 3a-3c), and a plurality of (outer) elements 2 associated with a second (outer) curve *C*₂ (see figures 3a-3c). The calibration device 100 is configured to enable adjustment of the position of the inner elements 1 along the inner curve *C*₁ and adjustment of the position of the outer elements 2 independently of the inner elements 1 along the outer curve *C*₂. In this embodiment, the curves are circular, concentric curves around a common axis A.

In this embodiment, the elements 1, 2 are cuboids. Each element 1, 2 has an extension in a longitudinal direction LO and an extension in a lateral direction LA. The lateral direction LA is in parallel with the common axis A. The longitudinal direction LO is normal to the curves *C*₁, *C*₂.

The calibration device 100 is configured to enable adjustment of the position of each element along the associated curve *C*₁, *C*₂ so that longitudinal directions of the elements 1, 2 in each of a first and a second subset 10, 20 of the set of elements are aligned in an alignment direction normal to the curve, and wherein a first total length in the longitudinal direction of the elements 1, 2 of the first subset 10 is different from a second total length in the longitudinal direction of the elements 1, 2 of the second subset 20. In particular, the positions of the elements 1, 2 are adjustable so that when the longitudinal directions of the elements 1, 2 of the first and second subsets 10, 20 are aligned in the alignment direction, the longitudinal extension of the elements of the first and second subsets, respectively, is within the radiation plane along a radiation path R of the X-ray beam. This property is further explained with reference to Figures 3a-3c.

Figures 3a-3c show three different configurations of the calibration device 100 according to the embodiment of the present invention. As one may take from Figures 3a to 3c, each element 1, 2 has a distal and a proximal end in the longitudinal direction LO. The proximal end is close to the common axis A, and the distal end is the end away from the common axis A. The calibration device 100 has six (inner) elements 1 associated with the first (inner) curve *C*₁ (dashed-dotted line). The distal ends of the elements 1 associated with the first curve *C*₁ move along the first curve *C*₁ during the adjustment of their positions along the first curve *C*₁. Seven (outer) elements 2 are associated with the second (outer) curve *C*₂ (dashed-dotted line). The proximal ends of the elements 2 associated with the second curve *C*₂ move along the second curve *C*₂ during the adjustment of their positions along the second curve *C*₂. Each closed curve *C*₁, *C*₂ has at least two elements 1, 2 with different longitudinal extension associated therewith.

Figure 3a shows a first configuration of the calibration device 100 which is the configuration of Figure 2. As one may take from Figure 3a, the longitudinal directions LO of three elements 1a, 2a, 2b are aligned in an alignment direction AD which is normal to the closed curves *C*₁, *C*₂. A radiation path R of the X-ray beam extends through the elements 1, 2 of the first and second subsets 10, 20 along their aligned longitudinal directions LO. The three elements are the elements of the first subset 10 which consists of the element 1a associated with the inner curve *C*₁ and the elements 2a, 2b associated with the outer curve *C*₂. The longitudinal extension of the element 1a is *h*₁, the longitudinal extension of the element 2a is *h*₂, and the longitudinal extension of the element 2b is *h*₃. Therefore, the total length of the elements 1a, 2a, 2b in the longitudinal direction LO is *h*₁ + *h*₂ + *h*₃. When the calibration device 100 is in the first configuration, the X-ray radiation emitted from the X-ray source 210 travels along the radiation path R parallel to the alignment direction AD through the three elements 1a, 2a, 2b and thereby travels through the total first length of the X-ray absorptive elements 1a, 2a, 2b in the longitudinal direction.

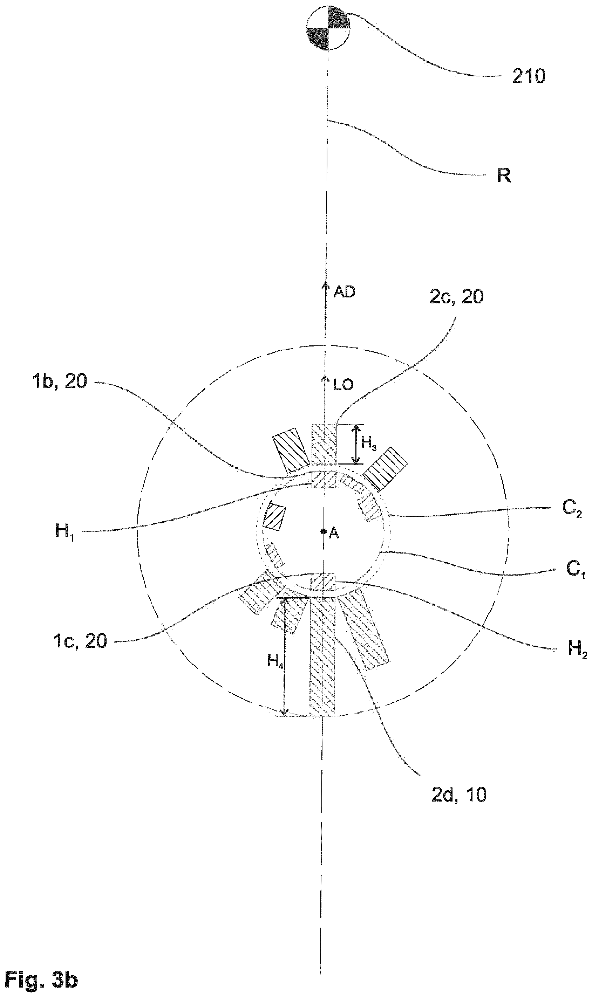

Figure 3b shows a second configuration of the calibration device 100 according to the embodiment of the present invention. The longitudinal directions LO of the four elements 1b, 1c, 2c, 2d of the second subset 200 are aligned in the alignment direction AD. The longitudinal extension LO of the element 1b is *H*₁, the longitudinal extension LO of the element 1c is *H*₂, the longitudinal extension of the element 2c is *H*₃ and the longitudinal extension of the element 2d is *H*₄. The elements 1b, 1c are associated with inner curve *C*₁ and the elements 2c, 2d are associated with the outer curve *C*₂*.* The second total length in the longitudinal direction of the elements 1b, 1c, 2c, 2d is *H*₁ + *H*₂ + *H*₃ + *H*₄. It is obvious from Figures 3a and 3b that the first total length in the longitudinal direction is different from the second total length in the longitudinal direction. When the X-ray radiation emitted from the X-ray source 210 is emitted, it travels along the radiation path R parallel to the alignment direction AD through the four elements 1b, 1c, 2c, 2d and thereby travels through the second total length of the X-ray absorptive elements in the longitudinal direction.

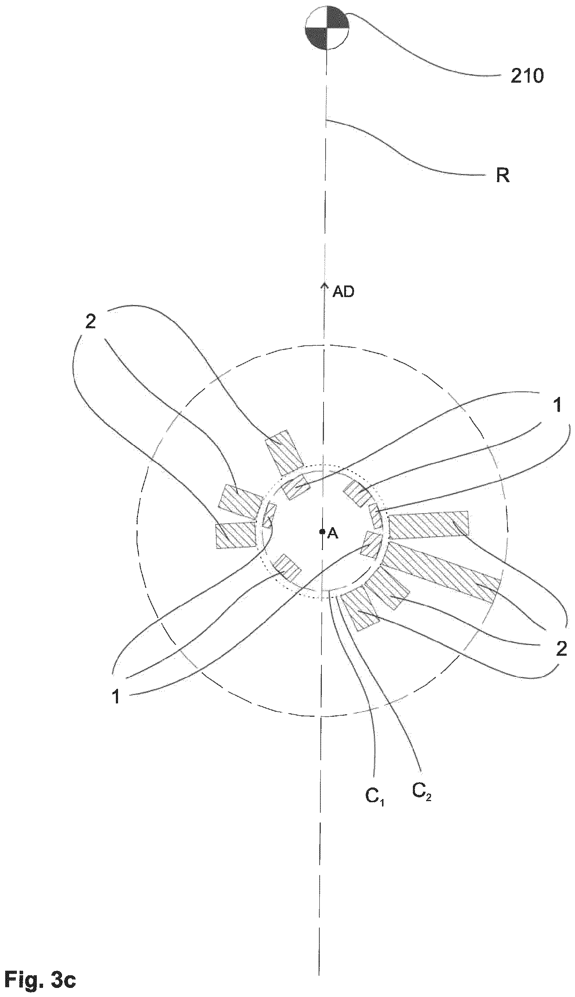

Figure 3c shows a third configuration of the calibration device 100 of the embodiment of the present invention. As one may take from Figure 3c, no elements intersect with the radiation path R of the X-ray radiation. Therefore, the X-ray radiation is not absorbed when passing through the calibration device 100.

### LIST OF REFERENCES

- 1, 1a, 1b, 1c: element associated with first closed curve
- 2, 2a, 2b, 2c, 2d: element associated with second closed curve
- 3: first lateral end
- 4: second lateral end
- 10: elements of the first subset of elements
- 20: elements of the second subset of elements
- 30a, 30b: first and second supports
- 31a, 31b: first segments
- 32a, 32b: seconds segments
- 40: position means
- 100: calibration device
- 200: X-ray system
- 210: X-ray source
- 211: fan-shaped beam
- 220: X-ray detector
- 230: belt conveyor
- 1000: X-ray apparatus
- A: common axis
- *C*₁: first curve
- *C*₂: second curve
- AD: alignment direction
- LO: longitudinal direction
- LA: lateral direction
- R: radiation path

## Claims

1. Device (100) for calibrating an X-ray system (200) with an X-ray source (210) and an X-ray detector (220), the calibration device (100) comprising a set of at least two X-ray absorptive elements (1, 2), each element (1, 2) extending in a longitudinal (LO) and in a lateral (LA) direction, **characterized in that** the device (100) is configured to enable adjustment of the position of each element (1, 2) along a closed curve (*C*₁, *C*₂) in a plane that extends transverse to the lateral direction (LA) and in parallel to the longitudinal direction (LO) so that elements (1, 2) in each of a first and a second subset (10, 20) of the set of elements (1, 2) are positioned with their longitudinal directions (LO) aligned in an alignment direction transverse to the curve (*C*₁, *C*₂), and wherein a first total length in the longitudinal direction (LO) of the elements (1, 2) of the first subset (10) is different from a second total length in the longitudinal direction (LO) of the elements (1, 2) of the second subset (20).

2. Device (100) according to claim 1, wherein the curve (*C*₁, *C*₂) comprises a plurality of nested, crossing-free curves (*C*₁, *C*₂) in the plane that extends transverse to the lateral direction (LA) and in parallel to the longitudinal direction (LO), each element (1, 2) is associated with one curve (*C*₁, *C*₂) of the plurality of curves and the device (100) is configured to enable adjustment of the position of each element (1, 2) along the associated curve (*C*₁, *C*₂) independent of the position of the elements (1, 2) associated with the other curves (*C*₁, *C*₂)*.*

3. Device (100) according to claim 2, wherein the curves (*C*₁, *C*₂) are concentric curves.

4. Device (100) according to anyone of the preceding claims, wherein each of the curves (*C*₁, *C*₂) is circular.

5. Device (100) according to anyone of the preceding claims, wherein at least two elements have a different longitudinal extension (*h*₁, *h*₃, *H*₁, *H*₂, *H*₃).

6. Device (100) according to anyone of the preceding claims, wherein the elements (1, 2) are separate elements (1, 2).

7. Device (100) according to claim 6, wherein the device (100) is configured to enable adjustment of the position of the elements so as to form a passageway extending straightly across the curve(s) and having none of the elements positioned therein.

8. Device (100) according to anyone of the preceding claims, wherein at least one of the first and second subsets (10, 20) comprises two elements (1, 2) associated with the same curve (*C*₁, *C*₂).

9. Device (100) according to anyone of the preceding claims, wherein first and second lateral ends (3, 4) of the elements (1, 2) are mounted on first and second supports (30a, 30b) which are spaced apart in the lateral direction and the device is configured to enable independent rotation of the first and second supports (30a, 30b) around a common axis (A) extending in the lateral direction (LA) to thereby adjust the position of the elements (1, 2) along the closed curves(s) (*C*₁, *C*₂).

10. Device (100) according to claim 2 and 9, wherein each of the first and second supports (30a, 30b) comprises a plurality of first and second segments (31a, 31b, 32a, 32b), respectively, and the device (100) is configured to enable rotation of the first and second segments (31a, 31b, 32a, 32b) relative to each other to thereby enable a relative movement of the elements (1, 2) associated with different curves (*C*₁, *C*₂).

11. Device (100) according to anyone of the preceding claim, further comprising means for positioning (40) the calibration device (100) in the X-ray system (200) between the X-ray source (210) and the X-ray detector (220).

12. Device (100) according to anyone of the preceding claims, further comprising a stationary X-ray absorber arranged within the curve(s) (*C₁*, *C*₂).

13. An X-ray apparatus (1000) comprising an X-ray system (200) having an X-ray source (210) operative to emit an X-ray beam (211) in a radiation plane and an X-ray detector (220) arranged so as to receive the X-ray beam (211) and to output a signal in response to an amount of the received radiation, and a calibration device (100) according to anyone of the preceding claims, wherein the calibration device (100) is arranged between the X-ray source (210) and the X-ray detector (220) such that when the longitudinal direction of the elements (1, 2) of the first and second subsets (10, 20) are respectively aligned in the alignment direction, and the longitudinal extension of the elements (1, 2) of the first and second subsets (10, 20) is within the radiation plane, along a radiation path (R) of the X-ray beam.

14. X-ray apparatus (1000) according to claim 13, wherein the X-ray source (210) is configured to emit a fan-shaped X-ray beam (211) in a radiation plane and the X-ray detector (220) comprises a line detector which is arranged in the radiation plane so as to receive the radiation beam (211).

15. Method for calibrating an X-ray system of an X-ray apparatus (1000) according to claim 13 or 14, the method comprising the following steps:
adjusting the positions of the elements (1,2) of the calibration device (100) in a first position so that the aligned longitudinal directions (LO) of the first subset (10) of elements (1, 2) are in the radiation plane;
after adjusting the elements (1, 2) in the first position, operating the X-ray source (210) to thereby receive a first signal in response to a first amount of radiation which has passed through the elements (1, 2) of the first subset (10);
adjusting the positions of the elements (1, 2) of the calibration device (100) in a second position so that the aligned longitudinal directions (LO) of the second subset (20) of elements (1, 2) are in the radiation plane;
after adjusting the elements (1, 2) in the second position, operating the X-ray source (210) to thereby receive a second signal in response to a second amount of radiation which has passed through the elements (1, 2) of the second subset (20);
calibrating the X-ray system (200) on the basis of the first and second signals.
